# EUROPEAN PATENT SPECIFICATION

(11) **EP 3 168 516 B1**
(45) Date of publication and mention of the grant of the patent: **20.06.2018**
(21) Application number: 16198549.4
(22) Date of filing: 11.11.2016
(51) Int. Cl.: F16K 24/04, F16K 24/06

(54) **VALVE ASSEMBLY FOR A VEHICULAR FLUID TANK, IN PARTICULAR OF AN EXTINGUISHING MEDIUM**
VENTILANORDNUNG FÜR EINEN FAHRZEUGFLÜSSIGKEITSTANK, INSBESONDERE FÜR EIN LÖSCHMEDIUM
ENSEMBLE SOUPAPE POUR UN RÉSERVOIR DE FLUIDE POUR VÉHICULE, EN PARTICULIER D'UN MILIEU EXTINCTEUR

(30) Priority: 12.11.2015 IT UB20155534
(43) Date of publication of application: 17.05.2017
(73) Proprietor: IVECO MAGIRUS AG, 89079 Ulm (DE)
(72) Inventor: Semmler, Oliver, 88416 Ochsenhausen (DE)
(74) Representative: Fiume, Orazio

(56) References cited:
- DE-C1- 4 300 441
- GB-A- 1 061 394
- US-A- 6 058 970

## Description

### Field of the invention

The present invention relates to the field of the liquid tank intended to be stably affixed to a vehicle in order to store a liquid, in particular in the field of firefighting vehicle, for storing an extinguishing medium.

### Description of the prior art

Currently a valve installation is not a standard feature of water or extinguishing fluid tanks of firefighting vehicles. Foam agent tanks do not have any kind of valve installation. In some cases, these tanks only have a kind of labyrinth seal, which leads the air in/out but restrains the way for the foam agent. The known valves installations consist of a rigid valve body that is kept in position by the tension of an additional spring; however, the foam deposits interfere with the additional spring.

Therefore, there is space to improve the current situation. Documents GB1061394, DE4300441 or US6058970 relate to aerating and/or venting valves with tubes and membranes.

### Summary of the invention

The main object of the present invention is to provide a valve assembly for a vehicular fluid tank, in particular for an extinguishing medium, which permits to fulfill, at least in an alternative way, the above requirements.

The main object is achieved by means of the valve assembly for a vehicular fluid tank, in particular for an extinguishing medium, according to claim 1. Another object of the present invention is a fluid tank comprising said valve.

With "vehicular fluid tank" is meant a tank stably affixed with the vehicle, having pipes stably connecting the tank with other vehicular components/devices.

A further object of the invention is a firefighting vehicle comprising said vehicular fluid tank.

The first advantage of the present proposal is the flexibility of the valve bodies with rubber membranes which makes an additional spring unnecessary because the necessary force to keep the valve closed results of its intrinsic tension. The additional advantage of the flexible valve bodies is that no deposit of e.g. foam agent is able to block the function. Because of its permanently changing surface it's self-cleaning. So the present proposal is also able to work in foam agent tanks.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:

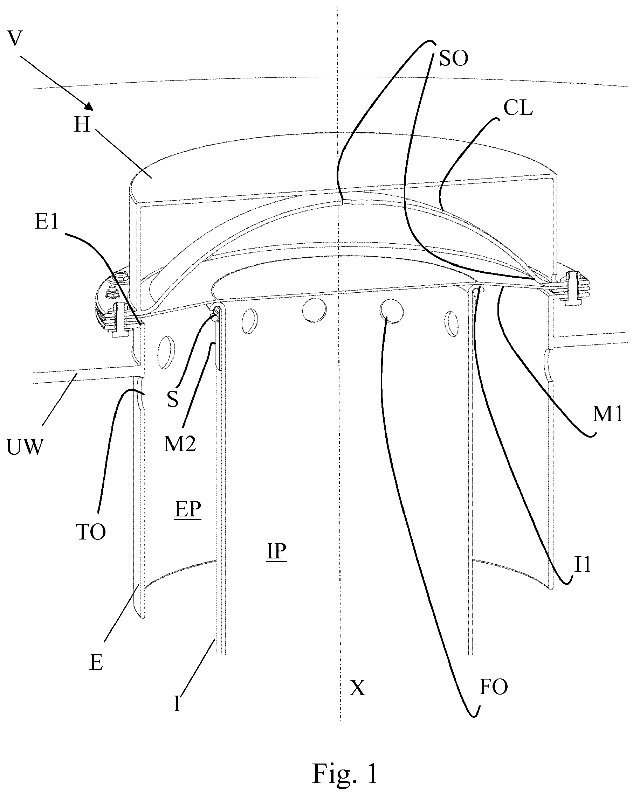

- Fig. 1 shows a perspective view of an axial sectional of the valve assembly.
- Figs. 2 and 3 show two opposite cooperation conditions of the valve assembly of figure 1,
- Fig. 4 shows a vehicular tank including the valve assembly according to figure 1.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

The valve assembly according to the present invention is defined by two coaxial tubular elements: an external one E, substantially a baffle, and an internal one I, substantially defining an outlet underneath the tank. Both the tubular elements are open at their opposite ends. They preferably share a common developing axis X and preferably, such X-axis is a symmetry axis and the valve assembly is a rotational solid, however this aspect is not mandatory.

In addition, the external tubular element can have an axial development considerably shorter thank the internal tubular element.

The mutual arrangement of the two tubular elements defining an external passage EP between the tubular elements and an internal passage IP within the internal element I.

The internal tubular element I has a first end I1 slightly protruding beyond a corresponding first end E1 of the external tubular element E.

Both the first ends I1 and E1 of the two tubular elements are cut according to mutually parallel planes.

A first membrane M1, in the shape of a thin sheet, is perimetrally affixed on the first edge E1 of the external tubular element, by covering and pressing uniformly the perimeter of the first end of the internal tubular element I1.

Preferably, the first end I1 of the internal tubular element I is roundly back folded in order to avoid cutting or incising the first membrane.

According to a first operation condition, such first membrane close completely any fluid passage from the internal passage to the external one and vice versa.

A differential pressure between the internal passage and the external one is suitable to push the first membrane by spacing it from the first edge of the internal tubular element.

The behaviour of the first membrane changes according to the sign of the pressure gradient between the internal and the ambient pressure. In particular, an over pressure on the external passage, with respect to the internal passage, should be lower than an over pressure on the internal passage, with respect to the external passage, in order to space the first membrane, by making the two passages communicating.

When a pressure, within the external passage, exceeds a first predetermined pressure, defined by the membrane material properties, the first membrane frees the communication between the passages by permitting fluid coming from the external passage to reach the internal passage.

The first end of the internal tubular element is provided with first through openings on its lateral surface. The axes of the openings laid on a common plane perpendicular with respect to said X-axis. Thus, such first openings are radially arranged with respect to the first end of the internal tubular element.

Preferably, the openings are equally angularly spaced between each other, so that they are uniformly distributed along the periphery of the first end.

A second membrane M2, in the form of a tape, surrounds the first end I1 of the internal tubular element, by covering said first openings.

A clamp S, made of any material, surrounding the tape, maintains an edge of such second membrane M2 in adhesion on the external wall of the internal tubular element.

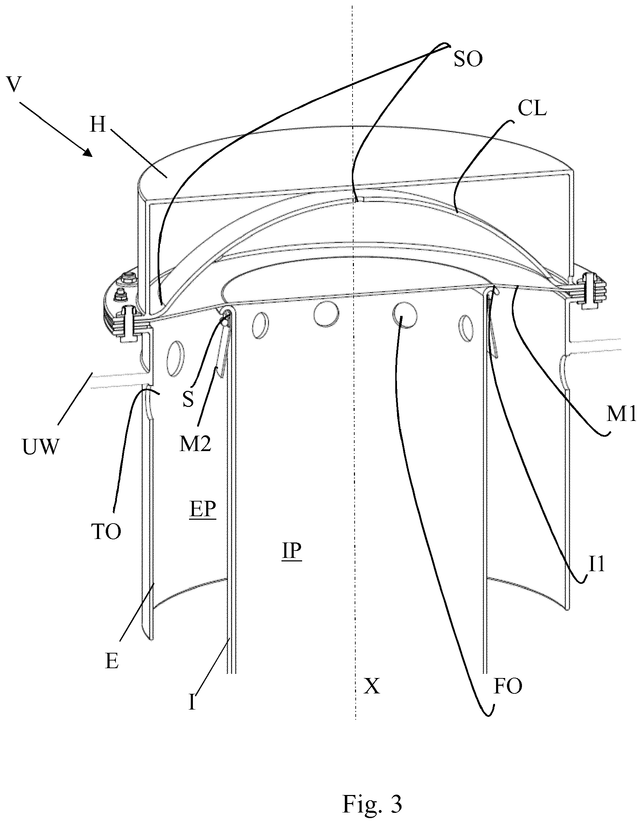

When a pressure, within the external passage, falls below a second predetermined pressure, defined by the membrane material properties, the second membrane M2, as a skirt, frees the openings FO, by permitting air coming from the internal passage - from ambient environment - to reach the external passage - inner portion of the tank. An example of such operating condition is disclosed on figure 3.

Preferably, the external passage is in every case in communication with the inner part of the vehicle tank TK, while the internal passage is in communication with the external environment.

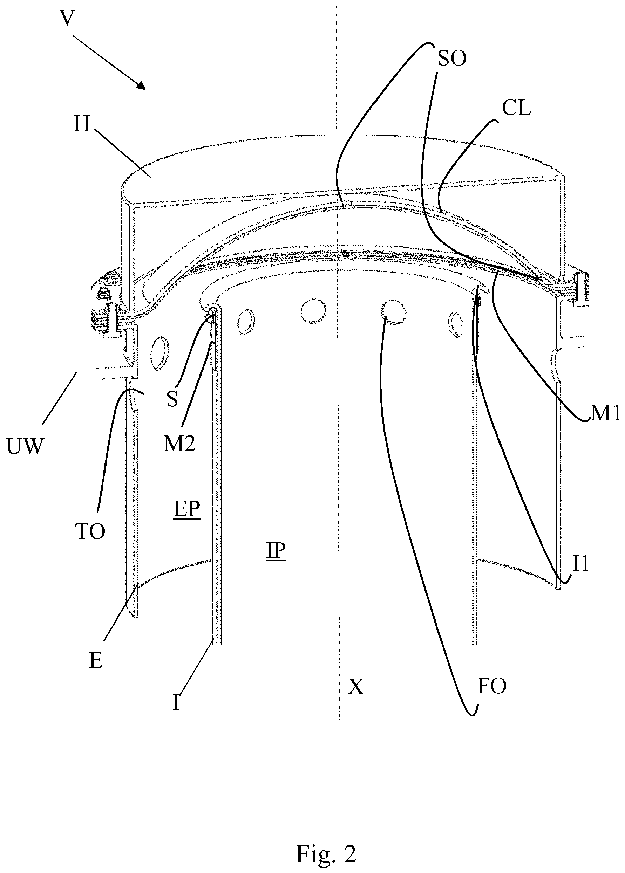

According to a preferred embodiment of the invention the valve assembly comprises a calotte CL affixed on the perimeter of the first end of the external tubular element, so that the first membrane, when pushed by the flow within the internal passage, adhere to the calotte as disclosed on figure 2.

The calotte CL, therefore, directs its concavity towards the first membrane by developing a limiting effect with respect to the elastically expansion of the first membrane under the effect of the overpressure generated within the external passage.

The calotte CL is perimetrally clamped on the edge of the first end of the external tubular element by locking, perimetrally, the first membrane in a sandwich fashion: first tubular element - membrane - calotte.

According to a preferred embodiment of the invention, the calotte comprises one or more second through opening SO, permitting such air interposed between the calotte and the first membrane to be vented according said second operating condition. Therefore, to the spring effect is associated a dumping effect due to the presence of such one or more openings SO. A cap H is superimposed to the calotte, and clamped with the calotte, on the perimetric edge of the first end of the external tubular element. Such cap H prevents ambient water (e.g. rain) runs between calotte and membrane through venting hole SO.

Therefore, according to the present invention, the first membrane has a first face oriented towards both the internal and external passages and a second face, opposite to the first one, in contact with stored air.

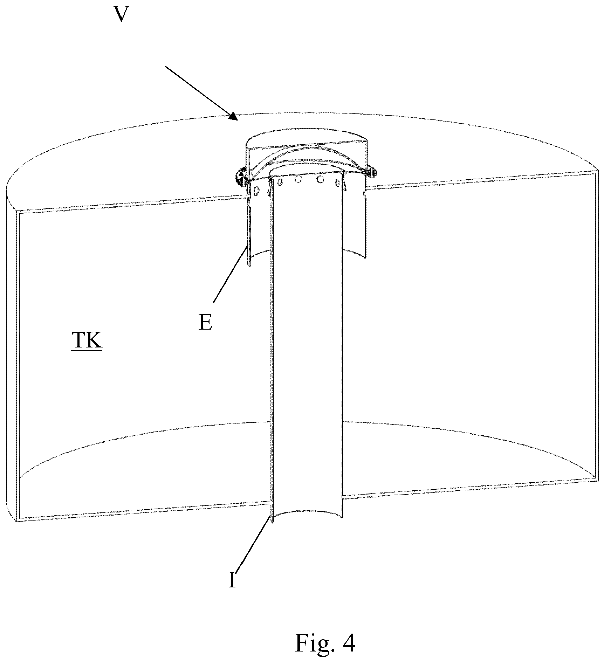

According to a preferred implementation of the valve assembly V, the external tubular element juts externally from an upper wall UW of a fluid tank FT. See figure 4.

The external tubular element and the valve assembly, as a whole, juts externally so that the first through openings are ideally outside of the tank by considering an ideally flat and continuous upper wall of the fluid tank.

The internal tubular element crosses the tank from the upper wall to a lower wall LW opposite to the upper wall, therefore, the second end I2 - opposite to the first end I1 - of the internal tubular element I communicates with the external environment.

The second end E2 of the external tubular element E, opposite to the first end E1, is within the fluid tank.

Preferably, the external tubular element juts internally to the fluid tank, beyond the upper wall and relative third through openings TO are arranged perimetrally on the external tubular element in a position adjacent with the upper wall UW of the fluid tank.

In particular, said third through openings have respective axes laying in a plane perpendicular to said development axis X. In this way, the air can freely reach the first membrane and then gains the internal passage toward the external environment.

The external tubular element, as depicted above, juts inside the tank beyond the upper wall of it. This portion protects the first membrane against the waves induced on the fluid stored in the tank during the vehicle motion.

Therefore, such external tubular element avoids the delivery of extinguishing medium while the firefighting vehicle moves. Advantageously, the present valve assembly avoids any kind of overpressures, by permitting the extinguishing medium to leave the tank for safety reasons; even when, the vehicular tank is not still, but affixed to a special vehicle subjected to sharp dynamics: accelerating, cornering, braking and the road or operating area could contribute with its slopes or non-flat conformation.

It is also clear that the development/symmetry axis X should be operatively vertically arranged when the valve assembly is associated to the medium tank, in order to achieve benefits from the external prolongation of the eternal tubular element.

It should be clear that the tank could have any shape and the upper and lower wall should not be necessarily parallel between each other.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention are deemed to be covered by this invention.

It should be understood that all the single features and/or embodiments can be combined between each other. In addition, the features disclosed in the prior art background are introduced only in order to better understand the invention and not as a declaration about the existence of known prior art. Therefore, also the features described in the prior art background can be considered in combination with those mentioned in each embodiment of the detailed description.

Further implementation details will not be described, as the man skilled in the art is able to carry out the invention starting from the teaching of the above description.

## Claims

1. Valve assembly for a vehicular fluid tank, in particular for an extinguishing medium, the valve assembly comprising
- two reciprocally coaxial tubular elements: an external tubular element (E) and an internal tubular element (I), said internal tubular element (I) being provided with a first end (II) and first through holes (FO) on a lateral wall of the first end,
- a first membrane (M1) perimetrally affixed on a first end (E1) of said external tubular element (E), wherein a first end (II) of said internal tubular element juts beyond said first end (E1) of the external tubular element, so as the first membrane, in a first operating condition, contacts and presses perimetrally the edge of the first end of the internal tubular element, **characterised in that** the valve assembly further comprises
- a second membrane (M2) surrounding the first end (II) of the internal tubular element, by covering said first through openings (FO); and
- a clamp (S) maintaining an edge of the second membrane (M2) in adhesion on the external wall of the internal tubular element.

2. Assembly according to claim 1, further comprising a calotte (CL) superimposed on said first end (E1) of said external tubular element (E), by retaining perimetrally said first membrane in a sandwich fashion, and wherein in a second operating condition, the first membrane adheres to the calotte (CL).

3. Assembly according to claim 2, wherein the calotte (CL) directs its concavity towards the first membrane.

4. Assembly according to any of the previous claims 2 or 3, wherein said calotte comprises one or more second through operating (SO) permitting an air interposed between the calotte and the first membrane to be vented according to said second operating condition.

5. Assembly according to claim 4, further comprising a closed cap (H) superimposed to the calotte, and clamped with the calotte, on the perimetric edge of the first end of the external tubular element

6. Fluid Tank (FT) comprising a valve assembly according to any of previous claims from 1 to 5.

7. Fluid tank according to claim 6, wherein the external tubular element juts externally from an upper wall (UW) of a fluid tank (FT) so that the first through openings are ideally outside of the tank by considering an ideally flat and continuous upper wall of the fluid tank.

8. Fluid tank according to one of claims 6 or 7, wherein said internal tubular element crosses the tank from an upper wall (UW) to a lower wall (LW) opposite to said upper wall (UW), so that a second end (12) - opposite to the first end (II) - of the internal tubular element (I) communicates with the external environment.

9. Fluid tank according to any one of claims 6 - 8, wherein the external tubular element juts internally to the fluid tank, beyond an upper wall (UW) of the fluid tank and third through openings (TO) are arranged perimetrally on the external tubular element in a position adjacent with the upper wall (UW) of the fluid tank.

10. Fluid tank according to any one of claims 6 - 9, wherein said coaxial tubular elements share a common development axis(X), operatively laying vertically.

11. Firefighting vehicle comprising a vehicular fluid tank containing an extinguishing medium and wherein said fluid tank is according to any one of claims from 6 to 10.

## Patentansprüche

1. Ventilanordnung für einen Fahrzeugfluidtank, insbesondere für ein Löschmedium, wobei die Ventilanordnung die folgenden Bestandteile umfasst:
- zwei wechselseitig koaxiale röhrenförmige Elemente: ein äußeres röhrenförmiges Element (E) und ein inneres röhrenförmiges Element (I), wobei das besagte innere röhrenförmige Element (I) mit einem ersten Ende (I1) und ersten Durchgangslöchern (FO) der Mantelfläche des ersten Endes (I1) versehen ist,
- eine erste Membran (M1), die am Umfang eines ersten Endes (E1) des besagten äußeren röhrenförmigen Elements (E) fixiert ist, wobei ein erstes Ende (I1) des besagten inneren röhrenförmigen Elements über besagtes erste Ende (E1) des äußeren röhrenförmigen Elements hinausragt, so dass die erste Membran in einem ersten Betriebszustand die Umfangskante des ersten Endes des inneren röhrenförmigen Elements berührt und an diese gedrückt wird, **dadurch gekennzeichnet, dass** die Ventilanordnung außerdem
- eine zweite Membran (M2), welche das erste Ende (I1) des inneren röhrenförmigen Elements umfasst und besagte erste Durchgangslöcher (FO) abdeckt; und
- eine Klemmvorrichtung (S), welche einen Rand der zweiten Membran (M2) in Haftkontakt mit der äußeren Wand des inneren röhrenförmigen Elements bringt,
umfasst.

2. Anordnung gemäß Anspruch 1, welche außerdem eine Kalotte (CL) umfasst, welche so auf besagtes erstes Ende (E1) des besagten äußeren röhrenförmigen Elements (E) aufgesetzt ist, dass besagte erste Membran entlang ihres Umfangs in einer Schichtanordnung festgeklemmt wird, wobei die erste Membran in einem zweiten Betriebszustand an der Kalotte (CL) anhaftet.

3. Anordnung gemäß Anspruch 2, bei welcher die Konkavität der Kalotte (CL) in Richtung der ersten Membran weist.

4. Anordnung gemäß einem der vorausgehenden Ansprüche 2 oder 3, bei welcher besagten Kalotte ein oder mehrere zweite Durchgangslöcher (SO) umfasst, welche es ermöglichen, dass in Abhängigkeit von besagtem zweiten Betriebszustand Luft zwischen die Kalotte und die besagte erste Membran ein- und ausströmen kann.

5. Anordnung gemäß Anspruch 4, ferner umfassend eine auf die Kalotte aufgebrachte geschlossene Kappe (H), die am äußeren Rand des ersten Endes des äußeren röhrenförmigen Elements mit der Kalotte verklemmt ist.

6. Flüssigkeitstank (FT), welcher eine Ventilanordnung gemäß einem der vorausgehenden Ansprüche 1 bis 5 umfasst.

7. Flüssigkeitstank gemäß Anspruch 6, bei welchem das äußere röhrenförmige Element außerhalb einer oberen Wand (UW) eines Fluidtanks (FT) hervorsteht, so dass die ersten Durchgangslöcher unter Berücksichtigung einer idealerweisen flachen und kontinuierlichen oberen Wand des Fluidtanks idealerweise außerhalb des Tanks liegen.

8. Flüssigkeitstank gemäß einem der Ansprüche 6 oder 7, bei welchem besagtes inneres röhrenförmiges Element den Tank von einer oberen Wand (UW) bis zu einer der besagten oberen Wand (UW) gegenüberliegenden unteren Wand (LW) durchkreuzt, so dass ein zweites dem ersten Ende (I1) gegenüberliegendes Ende (I2) des inneren röhrenförmigen Elements (I) mit der äußeren Umgebung in Verbindung steht.

9. Flüssigkeitstank gemäß einem der Ansprüche 6 bis 8, **dadurch gekennzeichnet, dass** das äußere röhrenförmige Element innerhalb des Flüssigkeitstanks über eine obere Wand (UW) des Flüssigkeitstanks hinausragt und dritte Durchgangslöcher (TO) auf dem Umfang des äußeren röhrenförmigen Elements in einer Position angebracht sind, die an die obere Wand (UW) des Flüssigkeitstanks angrenzt.

10. Flüssigkeitstank gemäß einem der Ansprüche 6 - 9, **dadurch gekennzeichnet, dass** besagte koaxiale rohrförmige Elemente eine gemeinsame Entwicklungsachse (X) teilen, die im Betrieb vertikal ausgerichtet ist.

11. Feuerwehrfahrzeug, das einen Fahrzeugfluidtank umfasst, welcher ein Löschmedium enthält, welcher Fluidtank einem der Ansprüche 6 bis 10 entspricht.

## Revendications

1. Ensemble de soupape pour un réservoir de fluide pour véhicule, en particulier pour un milieu extincteur, l'ensemble de soupape comprenant
- deux éléments tubulaires réciproquement coaxiaux : un élément tubulaire externe (E) et un élément tubulaire interne (I), ledit élément tubulaire interne (I) étant prévu avec une première extrémité (11) et des premiers trous débouchants (FO) sur une paroi latérale de la première extrémité,
- une première membrane (M1) fixée de manière périmétrale sur une première extrémité (E1) dudit élément tubulaire externe (E), dans lequel une première extrémité (I1) dudit élément tubulaire interne fait saillie au-delà de ladite première extrémité (E1) de l'élément tubulaire externe, de sorte que la première membrane, dans une première condition de fonctionnement, est en contact avec et comprime de manière périmétrale le bord de la première extrémité de l'élément tubulaire interne,
**caractérisé en ce que** l'ensemble de soupape comprend en outre
- une seconde membrane (M2) entourant la première extrémité (I1) de l'élément tubulaire interne, en recouvrant lesdites premières ouvertures débouchantes (FO) ; et
- un dispositif de serrage (S) maintenant un bord de la seconde membrane (M2) en adhérence sur la paroi externe de l'élément tubulaire interne.

2. Ensemble selon la revendication 1, comprenant en outre une calotte (CL) superposée sur ladite première extrémité (E1) dudit élément tubulaire externe (E), en retenant de manière périmétrale ladite première membrane, à la manière d'un sandwich, et dans lequel dans une seconde condition de fonctionnement, la première membrane adhère sur la calotte (CL).

3. Ensemble selon la revendication 2, dans lequel la calotte (CL) dirige sa concavité vers la première membrane.

4. Ensemble selon l'une quelconque des revendications 2 ou 3, dans lequel ladite calotte comprend une ou plusieurs deuxièmes ouvertures débouchantes (SO) permettant à un air intercalé entre la calotte et la première membrane d'être évacué selon ladite seconde condition de fonctionnement.

5. Ensemble selon la revendication 4, comprenant en outre un capuchon fermé (H) superposé sur la calotte, et serré avec la calotte, sur le bord périmétral de la première extrémité de l'élément tubulaire externe.

6. Réservoir de fluide (FT) comprenant un ensemble de soupape selon l'une quelconque des revendications 1 à 5.

7. Réservoir de fluide selon la revendication 6, dans lequel l'élément tubulaire externe fait extérieurement saillie d'une paroi supérieure (UW) d'un réservoir de fluide (FT) de sorte que les premières ouvertures débouchantes sont idéalement à l'extérieur du réservoir en prenant en considération une paroi supérieure du réservoir de fluide idéalement plate et continue.

8. Réservoir de fluide selon l'une des revendications 6 ou 7, dans lequel ledit élément tubulaire interne traverse le réservoir depuis une paroi supérieure (UW) à une paroi inférieure (LW) opposée à ladite paroi supérieure (UW), de sorte qu'une seconde extrémité (I2) - opposée à la première extrémité (I1) - de l'élément tubulaire interne (I) communique avec l'environnement externe.

9. Réservoir de fluide selon l'une quelconque des revendications 6 à 8, dans lequel l'élément tubulaire externe fait intérieurement saillie vers le réservoir de fluide, au-delà d'une paroi supérieure (UW) du réservoir de fluide et des troisièmes ouvertures débouchantes (TO) sont agencées de manière périmétrale sur l'élément tubulaire externe dans une position adjacente avec la paroi supérieure (UW) du réservoir de fluide.

10. Réservoir de fluide selon l'une quelconque des revendications 6 à 9, dans lequel lesdits éléments tubulaires coaxiaux partagent un axe de développement (X) commun, positionné de manière opérationnelle, verticalement.

11. Véhicule de lutte contre les incendies comprenant un réservoir de fluide pour véhicule, contenant un milieu extincteur et dans lequel ledit réservoir de fluide est selon l'une quelconque des revendications 6 à 10.
